# EUROPÄISCHE PATENTSCHRIFT

(11) **EP 0 901 993 B1**
(45) Veröffentlichungstag und Bekanntmachung des Hinweises auf die Patenterteilung: **28.01.2004**
(21) Anmeldenummer: 98116937.8
(22) Anmeldetag: 08.09.1998
(51) Int. Cl.: C04B 24/28

(54) **Wasserdispergierbare bzw. wasserlösliche Polyurethane als Additive für Beton**
Water-dispersable or water-soluble polyurethanes as concrete additives
Polyuréthanes dispersibles ou solubles dans l'eau comme additifs pour bétons

(30) Priorität: 15.09.1997 DE 19740454
(43) Veröffentlichungstag der Anmeldung: 17.03.1999
(73) Patentinhaber: BAYER AG, 51368 Leverkusen (DE)
(72) Erfinder: Laas, Hans-Josef, Dr., 50733 Köln (DE); Mazanek, Jan, Dr., 51061 Köln (DE); Knöfel, Dietbert, Prof. Dr., 57074 Siegen (DE); Böttger, Karl-Georg, 57078 Siegen (DE); Reinschmidt, Anke, 57223 Kreuztal (DE)

(56) Entgegenhaltungen:
- EP-A- 0 680 983
- DE-A- 2 626 431
- DE-A- 19 654 429
- US-A- 4 228 053
- DATABASE WPI Section Ch, Week 9648 Derwent Publications Ltd., London, GB; Class A25, AN 96-482009 XP002087890 & JP 08 245250 A (SANYO CHEM IND LTD) , 24. September 1996 -& PATENT ABSTRACTS OF JAPAN vol. 97, no. 1, 31. Januar 1996 & JP 08 245250 A
- DATABASE WPI Section Ch, Week 9605 Derwent Publications Ltd., London, GB; Class A25, AN 96-045229 XP002087891 & JP 07 309653 A (SANYO CHEM IND LTD) , 28. November 1995 -& PATENT ABSTRACTS OF JAPAN vol. 96, no. 3, 29. März 1996 & JP 07 309653 A
- DATABASE WPI Section Ch, Week 9644 Derwent Publications Ltd., London, GB; Class A93, AN 96-439322 XP002087892 & JP 08 217516 A (TOBU KAGAKU KK) , 27. August 1996 -& PATENT ABSTRACTS OF JAPAN vol. 96, no. 12, 26. Dezember 1996 & JP 08 217516 A

## Beschreibung

Die Erfindung betrifft die Verwendung wasserdispergierbarer bzw. wasserlöslicher, gegebenenfalls Isocyanatgruppen aufweisender Polyetherurethane als Zusatzmittel für anorganische Bindemittel bei der Herstellung von hochdichten bzw. hochfesten Mörtelmassen oder Beton.

Konventionelle Beton- bzw. Mörtelmassen bestehen aus einem anorganischen Bindemittel, wie z. B. Zement, einem Zuschlag wie Kies oder Sand, Wasser sowie gegebenenfalls noch weiteren Zusatzmitteln und/oder Zusatzstoffen. Baustofflich unterscheiden sich Beton und Mörtel dabei lediglich durch die maximale Korngröße der verwendeten Zuschläge: bei maximalen Korngrößen bis 4 mm spricht man im allgemeinen von Mörtel, bei gröberen Zuschlägen von Beton. Im Rahmen der vorliegenden Erfindung soll daher zwischen den Begriffen "Beton" und "Mörtel" nicht weiter unterschieden werden, stattdessen sollen beide Begriffe gleichbedeutend für beliebige mineralische Baustoffe auf Basis anorganischer Bindemittel stehen.

Zur Verbesserung der Verarbeitungs- und Gebrauchseigenschaften, beispielsweise zur Erhöhung der Festigkeit oder der Beständigkeit gegenüber Chemikalien, werden heute in zunehmendem Maße Kunststoffe als Betonzusatzmittel eingesetzt. Eine Übersicht über die Vielzahl unterschiedlicher Polymere, die bereits zur Modifizierung von Beton erprobt wurden, findet sich beispielsweise in: H. Schorn, Betone mit Kunststoffen, Ernst & Sohn Verlag für Architektur und technische Wissenschaften, Berlin 1991, S. 25.

Auch Polyisocyanate und Polyurethane wurden schon als mögliche Zusatzmittel für Beton vorgeschlagen. So werden beispielsweise in der DE-A 1 924 468 aromatische Polyisocyanate, wie Diphenylmethandiisocyanat (MDI), Toluylendiisocyanat (TDI) oder deren Derivate, aber auch Biurete und Urethane des aliphatischen Hexamethylendiisocyanats (HDI), als geeignete Zusatzmittel für Zementmischungen genannt.

Diese sollen, entweder alleine oder auch in Kombination mit weiteren, gegenüber Isocyanatgruppen reaktiven Polymeren, im Sinne von Zweikomponenten-Polyurethansystemen einer Betonmasse zugesetzt, bei der Herstellung von Fußbodenbelägen zu einer beschleunigten Aushärtung führen und eine frühere Begehbarkeit erlauben. Auch aus der EP-A 23 579 ist der Effekt einer schnelleren Aushärtung von Beton- bzw. Mörtelmassen nach Zusatz geringer Mengen organischer, bevorzugt aromatischer Polyisocyanate bekannt. In beiden Fällen kommen jedoch ausschließlich hydrophobe Polyisocyanate zum Einsatz, die mit Wasser völlig unverträglich sind und sich selbst unter Mitverwendung erheblicher Mengen organischer Lösungsmittel nicht homogen in ein anorganisches Bindemittel einrühren lassen.

Grundvoraussetzung für die Bildung eines gleichmäßigen Polymergerüstes innerhalb der anorganischen Bindemittelmatrix und damit für optimale Endeigenschaften des Betons ist aber eine möglichst einheitliche Verteilung des polymeren Zusatzmittels in der Bindemittelmischung.

Die EP-A 181 261 beschreibt die Verwendung von Polyisocyanaten in Form feinteiliger wäßriger Dispersionen zur endogenen Carbonatisierung von Beton. Zum Einsatz kommt dabei als Polyisocyanat ausschließlich das hydrophobe MDI, das mit Hilfe eines Hochgeschwindigkeitsrührers im Mengenverhältnis von 4 : 1 bis 2 : 1 mit Wasser vorgemischt, d. h. in Form einer Wasser-in-Öl-Emulsion, der Betonmasse zugefügt wird. Solche unter Einsatz hoher Scherkräfte erhältlichen Emulsionen von Wasser in MDI weisen zwar für sich alleine eine begrenzte Stabilität auf, beim Einrühren dieser Emulsionen in eine überschüssige Menge eines wäßrigen Systems, wie es eine Betonmischung darstellt, werden jedoch keine feinteiligen Öl-in-Wasser-Emulsionen erhalten, stattdessen tritt augenblicklich Phasentrennung ein. Auch nach dem Verfahren der EP-A 181 261 lassen sich Polyisocyanate nicht genügend homogen in Beton- oder Mörtelmassen einarbeiten.

Nach der Lehre der DE-A 2 300 206 läßt sich die Verträglichkeit hydrophober Polyisocyanate mit Zementzusammensetzungen durch Kombination mit wasserlöslichen, gegebenenfalls noch zusätzliche Emulgatoren enthaltenden Polymeren, beispielsweise Cellulosederivaten, Polyvinylalkoholen oder Polyetheralkoholen, deutlich verbessern. Die nach dem beschriebenen Verfahren erhältlichen wäßrigen Zementgemische weisen aber selbst bei Mitverwendung organischer Lösungsmittel nur sehr kurze, nicht praxisgerechte Verarbeitungszeiten von wenigen Minuten auf. Darüberhinaus führen die auf diese Weise in das Bindemittel eingebrachten erheblichen Mengen wasserlöslicher Polymere zu einer permanenten Hydrophilie und somit zu einer unerwünscht hohen Wasseraufnahme des Betons.

Die US-P 4 143 014 schildert ein weiteres sehr spezielles Verfahren zur Einarbeitung eines hydrophoben Polyisocyanates in ein wäßriges System. Danach lassen sich Mischungen aus wasserlöslichen Polyetherdiolen mit überschüssig äquivalenten Mengen an MDI innerhalb eines kurzen Zeitraums nach dem Einsetzen aber noch vor Beendigung der Urethanisierungsreaktion zu klaren stabilen Lösungen in Wasser einrühren. Solche Lösungen sollen sich gemäß der US-P 4 228 053 auch zur Verbesserung der Beständigkeitseigenschaften von Beton eignen. Der genaue Zeitpunkt, von dem an die Reaktionsgemische aus MDI und Polyetheralkohol für wenige Minuten eine ausreichende Wassermischbarkeit aufweisen, ist von der Art des jeweils eingesetzten Polyetherdiols abhängig und läßt sich nur in aufwendigen Vorversuchen ermitteln. Auch dieses Verfahren konnte sich daher in der Praxis nicht durchsetzen.

Alle bisher genannten Verfahren zur Modifizierung von Beton durch Zusatz von Polyisocyanaten oder Polyurethansystemen benötigen entweder die Mitverwendung weiterer organischer Verbindungen, beispielsweise Lösungsmittel oder spezieller wasserlöslicher Polymere, oder aber spezielle Mischaggregate, wie Hochgeschwindigkeitsrührer, um überhaupt eine geringe Mischbarkeit der hydrophoben Polyisocyanatkomponente mit dem anorganischen Bindemittel zu ermöglichen.

Zur Umgehung dieser Nachteile wurde auch bereits versucht, durch Einbau ionischer Gruppen hydrophil modifizierte, selbstdispergierbare Polyisocyanate als Zusatzmittel für anorganische Bindemittel einzusetzen (DE-A 2 359 611). Solche Salzgruppen enthaltenden Polyisocyanate lassen sich zwar sehr feinteilig in wäßrige Systeme einrühren, ohne daß hohe Scherkräfte erforderlich sind, sie weisen aber in Substanz eine völlig ungenügende Lagerstabilität auf. Aufgrund der bekannten katalytischen Aktivität ionischer Gruppen setzt bereits bei Raumtemperatur eine Polymerisation der Isocyanatgruppen, beispielsweise unter Trimerisierung zu Polyisocyanuraten oder Bildung von α-Nylonstrukturen, ein, die in der Regel nach wenigen Tagen zum Gelieren des Produktes führt.

Aufgabe der vorliegenden Erfindung war es nun, neue Polyurethane als Zusatzmittel zur Verbesserung der Verarbeitungs- und Gebrauchseigenschaften von Beton zur Verfügung zu stellen, die nicht mit den geschilderten Nachteilen des Standes der Technik behaftet sind. Diese neuen Zusatzmittel sollten lagerstabil sowie frei von organischen Lösungsmitteln sein, sich leicht, d. h. ohne daß dazu spezielle Mischaggregate erforderlich sind, feinteilig dispergieren lassen und die Verarbeitungszeit von Betonmassen nicht nachteilig beeinflussen.

Diese Aufgabe konnte jetzt durch die Verwendung spezieller, an sich bekannter Polyetherurethane als Zusatzmittel für anorganische Bindemittel gelöst werden. Die Erfindung beruht auf der überaschenden Beobachtung, daß sich durch Zusatz bereits sehr geringer Mengen wasserdispergierbarer bzw. wasserlöslicher Polyetherurethane, die gegebenenfalls freie Isocyanatgruppen aufweisen können, die mechanischen Eigenschaften konventioneller Beton- oder Mörtelmassen, wie Druck- und Zugfestigkeit oder auch Elastizität, erheblich verbessern lassen.

Gegenstand der vorliegenden Erfindung ist die Verwendung wasserdispergierbarer bzw. wasserlöslicher Polyetherurethane als Zusatzmittel für hydraulische Bindemittel bei der Herstellung von Mörtelmassen oder Beton, gemäß Anspruch 1.

Bei den erfindungsgemäß eingesetzten Betonzusatzmitteln handelt es sich um an sich bekannte wasserdispergierbare bzw. wasserlösliche, gegebenenfalls freie Isocyanatgruppen aufweisende Polyetherurethane.

Ausgangsverbindungen A) zur Herstellung solcher Polyetherurethane sind beliebige durch Phosgenierung oder nach phosgenfreien Verfahren, beispielsweise durch Urethanspaltung, zugängliche Mono- oder Diisocyanate mit aliphatisch, cycloaliphatisch und/oder aromatisch gebundenen Isocyanatgruppen, insbesondere solche des Molekulargewichtsbereiches 85 bis 400, wie z.B. Propylisocyanat, Butylisocyanat, Cyclohexylisocyanat, Stearylisocyanat, Phenylisocyanat, 1,4-Butandiisocyanat, 1,6-Diisocyanatohexan (Hexamethylendiisocyanat, HDI), 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat, IPDI), 4,4'-Diisocyanatodicyclohexylmethan, 1,3-Diisocyanato-2(4)-methylcyclohexan, 1,3- bzw. 1,4-Phenylendiisocyanat, 2,4- bzw. 2,6-Toluylendiisocanat (TDI), Diphenylmethan-2,4'- bzw. -4,4'-diisocyanat (MDI) und Naphthylen-1,5-diisocyanat oder deren Gemische, sowie durch Modifizierung dieser Mono- und Diisocyanate hergestellte Polyisocyanate mit Uretdion-, Isocyanurat-, Urethan-, Allophanat-, Biuret- und/oder Oxadiazintrionstruktur, wie sie beispielsweise in den DE-A 1 670 666, 3 700 209 und 3 900 053 oder den EP-A 336 205 und 339 396 beispielhaft beschrieben sind.

Bevorzugte Ausgangsverbindungen A) sind solche mit aliphatisch und/oder cycloaliphatisch gebundenen Isocyanatgruppen. Besonders bevorzugt sind HDI, IPDI, 4,4'-Diisocyanatodicyclohexylmethan oder deren Gemische sowie Polyisocyanate auf Basis dieser Diisocyanate.

Geeignete Polyetheralkohole B) zur Herstellung der wasserdispergierbaren bzw. wasserlöslichen Polyetherurethane sind ein wertige im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole B) sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Die Polyalkylenoxidpolyetheralkohole sind solche, die unter Verwendung der obengenannten Monoalkohole des Molekulargewichtsbereiches 32 bis 150 als Startermoleküle hergestellt wurden. Besonders bevorzugte Polyetheralkohole B) sind reine Polyethylenglykolmonomethyletheralkohole, die im statistischen Mittel 5 bis 50, ganz besonders bevorzugt 5 bis 25 Ethylenoxideinheiten aufweisen.

Neben den genannten Polyetheralkoholen können bei der Herstellung der erfindungsgemäß als Betonzusatzmittel eingesetzten wasserdispergierbaren bzw. wasserlöslichen Polyetherurethane gegebenenfalls noch weitere gegenüber Isocyanatgruppen reaktive Gruppen aufweisende Verbindungen C) mitverwendet werden. Hierbei handelt es sich hauptsächlich um ein- oder mehrwertige organische Verbindungen des Molekulargewichtsbereiches 32 bis 500 mit Hydroxyl-, Amino- und/oder Mercaptangruppen oder um beliebige Gemische solcher Verbindungen.

Geeignete Komponenten C) sind beispielsweise einfache Alkohole, wie sie z. B. oben bei der Herstellung der Polyetheralkohole B) als Startermoleküle beschrieben sind, Etheralkohole, wie z. B. 2-Methoxyethanol, 2-Ethoxyethanol, 2-Propoxyethanol, 2-Butoxyethanol, Diethylenglykol, Diethylenglykolmonomethylether, Diethylenglykol-monoethylether, Diethylenglykolmonobutylether, Triethylenglykol, Tetraethylenglykol, 1-Methoxy-2-propanol, 1-Ethoxy-2-propanol, Dipropylenglykolmonomethylether, Tripropylenglykolmonomethylether die isomeren Dipropylenglykole, 3-Methoxy-1-butanol und Glycerin-1,3-diethylether, oder Esteralkohole, wie z. B. Ethylglykolat, Butylglycolat, Ethyllactat und Neopentylglykolhydroxypivalat. Geeignet sind auch beliebige ein- oder mehrwertige Amine, wie z. B. Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine, Aminomethylcyclohexan, Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin, Dicyclohexylamin, Hydrazin, Ethylendiamin, 1,2-Diaminopropan, 1,4-Diaminobutan, 2-Methyl-pentamethylendiamin, 1,6-Diaminohexan, 2,2,4- bzw. 2,4,4-Trimethylhexamethylendiamin, 1,2-Diaminocyclohexan, 1-Amino-3,3,5-trimethyl-5-aminomethylcyclohexan (Isophorondiamin, IPDA), 4,4'-Diaminodicyclohexyl-methan, Pyrrolidin, Piperidin, Piperazin, (3-Aminopropyl)-trimethoxysilan, (3-Aminopropyl)-triethoxysilan und (3-Methylamino)propyl-trimethoxysilan, Aminoalkohole, wie z. B. 2-Aminoethanol, 2-Methylaminoethanol, 2-(Dimethylamino)-ethanol, 2-(Diethylamino)-ethanol, 2-(Dibutyl-amino)-ethanol, Diethanolamin, N-Methyl-diethanolamin, Triethanolamin, 3-Amino-1-propanol, 3-Dimethylamino-1-propanol, 1-Amino-2-propanol, 1-Dimethylamino-2-propanol, 1-Diethylamino-2-propanol, Bis-(2-hydroxypropyl)-amin, Bis-(2-hydroxypropyl)-methylamin, 2-(Hydroxyethyl)-bis-(2-hydroxypropyl)-amin, Tris-(2-hydroxypropyl)-amin, 4-Amino-2-butanol, 2-Amino-2-methylpropanol, 2-Amino-2-methyl-1,3-propandiol, 2-Amino-2-hydroxypropyl-1,3-propandiol und N-(2-Hydroxyethyl)-piperidin, Etheramine, wie z. B. 2-Methoxyethylamin, 3-Methoxypropylamin, 2-(2-Dimethylaminoethoxy)-ethanol und 1,4-Bis-(3-aminopropoxy)-butan, oder Mercaptane, wie z. B. Butylmercaptan und Dodecylmercaptan.

Daneben können bei der Herstellung der erfindungsgemäß als Betonzusatzmittel eingesetzten wasserdispergierbaren bzw. wasserlöslichen Polyetherurethane als Komponente C) gegebenenfalls aber auch die aus der Polyurethanchemie als Blockierungsmittel für Isocyanatgruppen, bekannten Oxime, wie z. B. Acetonoxim, Butanonoxim und Cyclohexanonoxim, Lactame, wie z. B. ε-Caprolactam, oder C-H-aziden Verbindungen, wie z. B. Malonsäurediethylester, eingesetzt werden.

Als Ausgangsverbindungen C) besonders geeignet sind die obengenannten Hydroxylgruppen und/oder sekundäre Aminogruppen enthaltenden Verbindungen des Molekulargewichtsbereiches 32 bis 300.

Die Herstellung der als Betonzusatzmittel eingesetzten wasserdispergierbaren bzw. wasserlöslichen Polyetherurethane erfolgt nach bekannten Verfahren. Geeignete Polyetherurethane sind beispielsweise in einer Reihe von Veröffentlichungen als oberflächenaktive Mittel oder Emulgatoren für hydrophobe Polymere, wie Polyisocyanate, beschrieben (z. B.: DE-A 2 415 435, EP-A 13 112, EP-A 19 844, EP-A 61 628, EP-A 110 497, EP-A 206 059, EP-A 281 801, EP-A 486 881, WO 96/30425).

Im allgemeinen wird bei der Herstellung der wasserdispergierbaren bzw. wasserlöslichen Polyetherurethane so vorgegangen, daß man die Ausgangsverbindungen A), B) und gegebenenfalls C), gegebenenfalls unter Inertgas wie beispielsweise Stickstoff, bei Temperaturen von 20 bis 140°C, vorzugsweise von 40 bis 120°C, unter Einhaltung eines Äquivalentverhältnisses von NCO-Gruppen zu gegenüber Isocyanaten reaktiven Gruppen von 0,5 : 1 bis 3 : 1, vorzugsweise von 0,8 : 1 bis 2 : 1, vorzugsweise bis zum Erreichen des theoretisch errechneten NCO-Gehaltes miteinander umsetzt. Die Umsetzung wird im allgemeinen lösemittelfrei durchgeführt. Sie kann aber auch in geeigneten, gegenüber Isocyanatgruppen inerten Lösemitteln erfolgen. Gut geeignete Lösemittel sind beispielsweise Ethylacetat, Butylacetat, Ethylenglykolmonomethyl- oder ethyletheracetat, 1-Methoxypropyl-2-acetat, 2-Butanon, 4-Methyl-2-pentanon, Cyclohexanon, Toluol, oder deren Gemische, aber auch Lösemittel, wie Propylenglykoldiacetat, Diethylenglykoldimethylether, Diethyleriglykolethylund -butyletheracetat, N-Methylpyrrolidon und N-Methylcaprolactam, oder Gemische solcher Lösemittel.

Werden zur Herstellung der Polyetherurethane als Ausgangskomponenten A) Monooder Diisocyanate eingesetzt, so kann die Umsetzung mit den Ausgangsverbindungen B) und gegebenenfalls C) auch in einem Äquivalentverhältnis von NCO-Gruppen zu gegenüber Isocyanaten reaktiven Gruppen von größer als 3 : 1, beispielsweise bis zu einem Verhältnis von 50 : 1 durchgeführt werden. In diesem Fall werden die überschüssigen, nicht umgesetzten Mono- bzw. Diisocyanate nach Erreichen des theoretisch errechneten NCO-Gehaltes beispielsweise durch Dünnschichtdestillation oder Extraktion bis auf einen Restgehalt von weniger als 2 Gew.-%, vorzugsweise von weniger als 0,5 Gew.-%, abgetrennt.

Die erfindungsgemäß zur Modifizierung von Beton- oder Mörtelmassen eingesetzten wasserdispergierbaren bzw. wasserlöslichen Polyetherurethane weisen gegebenenfalls freie aliphatisch und/oder cycloaliphatisch gebundene Isocyanatgruppen auf. Erfindungsgemäß sind auch Polyetherurethane als Betonzusatzmittel geeignet, die zusätzlich, vorzugsweise in unterschüssig molarer Menge bezogen auf die Gesamtmenge an freien Isocyanatgruppen, aromatisch gebundene Isocyanatgruppen aufweisen, sofern sie den oben unter a) bis d) genannten Bedingungen entsprechen. Derartige gemischt aliphatisch/aromatische Polyetherurethane sind ebenfalls bereits bekannt und können beispielsweise nach dem in der EP-A 680 983 beschriebenen Verfahren durch Umsetzung von Polyethylenoxidpolyethern und gegebenenfalls weiteren Alkoholen mit Mischungen monomerenarmer Polyisocyanate auf Basis von HDI und solchen auf Basis von 2,4(6)-Diisocyanatotoluol (Toluylendiisocyanat, TDI) erhalten werden.

Unabhängig vom gewählten Herstellverfahren kommen im Rahmen der vorliegenden Erfindung als Zusatzmittel für anorganische Bindemittel bei der Herstellung von Mörtelmassen oder Beton wasserdispergierbare bzw. wasserlösliche Polyetherurethane zum Einsatz, die bei einer mittleren Isocyanatfunktionalität von weniger als 1,8, vorzugsweise von weniger als 1,5 einen Gehalt an aliphatisch und/oder cycloaliphatisch gebundenen Isocyanatgruppen von 0 bis 10 Gew.-%, vorzugsweise von 0 bis 6 Gew.-%, einen Gehalt an Urethangruppen von 2,0 bis 25,0 Gew.-%, vorzugsweise von 4,0 bis 21,5 Gew.-%, und einen Gehalt an innerhalb von Polyetherketten gebundenen Ethylenoxideinheiten von 30 bis 90 Gew.-%, vorzugsweise von 40 bis 80 Gew.-% aufweisen, wobei die Polyetherketten im statistischen Mittel 5 bis 50, vorzugsweise 5 bis 25 Ethylenoxideinheiten enthalten.

Als Betonzusatzmittel bevorzugt sind wasserdispergierbare bzw. wasserlösliche Polyetherurethane, die durch Umsetzung von Isocyanuratgruppen aufweisenden Polyisocyanaten auf Basis aliphatischer und/oder cycloaliphatischer Diisocyanate mit einem Isocyanatgruppen-Gehalt von 12 bis 28 Gew.-% und einem Gehalt an monomeren Diisocyanaten von weniger als 0,5 Gew.-% mit im statistischen Mittel 5 bis 50 Ethylenoxideinheiten enthaltenden Polyetheralkoholen und gegebenenfalls weiteren gegenüber Isocyanatgruppen reaktive Gruppen tragenden Verbindungen des Molekulargewichtsbereiches 32 bis 300 hergestellt wurden.

Besonders bevorzugt sind solche, die durch Umsetzung eines im wesentlichen Isocyanuratgruppen und gegebenenfalls Uretdion- und/oder Allophanatgruppen aufweisenden Polyisocyanates auf Basis von HDI mit einem Isocyanatgruppen-Gehalt von 19 bis 24 Gew.-% und einem Gehalt an monomerem HDI von weniger als 0,5 Gew.-% mit im statistischen Mittel 5 bis 25 Ethylenoxideinheiten enthaltenden Polyethylenglykolmonomethylethern und gegebenenfalls weiteren gegenüber Isocyanatgruppen reaktive Gruppen tragenden Verbindungen des Molekulargewichtsbereiches 32 bis 300 hergestellt wurden.

Erfindungsgemäß lassen sich die genannten wasserdispergierbaren bzw. wasserlöslichen, gegebenenenfalls freie Isocyanatgruppen aufweisenden Polyetherurethane beliebigen Beton- oder Mörtelmassen zur Verbesserung der Verarbeitungs- und Gebrauchseigenschaften zusetzen.

Die Herstellung von Beton aus anorganischen Bindemitteln, Zuschlägen, Wasser und gegebenenfalls weiteren Zusatzmitteln und Zusatzstoffen ist lange bekannt und beispielsweise in Ullmanns Encyclopädie der technischen Chemie, 4. Auflage, Band 8, Verlag Chemie, Weinheim S. 314-326 ausführlich beschrieben.

Als anorganische Bindemittel werden üblicherweise mineralische Stoffe bezeichnet, die unter Wasseraufnahme aufgrund physikalischer und/oder chemischer Vorgänge steinartig aushärten. Beispielhaft seien hier genannt Portlandzement, Portlandhüttenzement, Portlandflugaschezement, Portlandkalksteinzement, Portlandflugaschehüttenzement und Hochofenzement, Spezialzemente, wie z. B. Zemente mit hohem Sulfatwiderstand, niedriger Hydratationswärme oder niedrigem Alkaligehalt, oder auch synthetischer Anhydrit, Gips oder gebrannter Kalk.

Als Zuschläge sind insbesondere natürliche oder künstliche, dichte oder porige Gesteine, wie z.B. Sand, Kies, Schotter, Splitt, Brechsand, Lavaschlacken, Klinkerbruch, Granit, Basalt, Bims, Ton, Tonschiefer, Schiefer, Flugasche oder Blähglimmer, sowie in Einzelfällen auch Metalle oder organische Zuschläge gebräuchlich.

Gegebenenfalls können bei der Herstellung von Beton weitere Zusatzmittel und -stoffe zum Einsatz kommen, mit deren Hilfe die Eigenschaften des Frisch- oder Festbetons gezielt beeinflußt werden können.

Betonzusatzmittel nennt man dabei Stoffe, die in einer Menge von maximal 5 Gew.-% einem Beton zugesetzt werden und als Volumenanteil mithin keine Rolle spielen. Hierzu zählen beispielsweise Betonverflüssiger, Luftporenbildner, Betondichtungsmittel, Erstarrungsverzögerer oder -beschleuniger und Einpreßhilfen bei Spannbeton.

Sogenannte Betonzusatzstoffe werden dem Beton in einer sehr viel größeren Menge zugesetzt als die genannten Zusatzmittel. Es handelt sich hierbei insbesondere um mineralische Stoffe, wie z. B. Gesteinsmehle, Flugasche, Hochofenschlacken oder Traß, aber auch Kunststoffe oder Pigmente bzw. Zementfarben.

Die wasserdispergierbaren bzw. wasserlöslichen, gegebenenenfalls freie Isocyanatgruppen aufweisenden Polyetherurethane werden erfindungsgemäß einer Mörtelmasse oder einem Beton in einer Menge bis zu 10 Gew.-%, vorzugsweise 0,5 bis 5 Gew.-%, bezogen auf den Bindemittelanteil, zugesetzt. Die Zugabe kann dabei zu jedem beliebigen Zeitpunkt vor oder während des Mischvorgangs sowohl in Substanz als auch in Form wäßriger Dispersionen der Polyetherurethane im Anmachwasser oder einer Teilmenge des Anmachwassers erfolgen.

Im allgemeinen werden diese neuen Zusatzmittel in lösemittelfreier Form eingesetzt. Die Zugabe kann jedoch auch, falls erforderlich, in Form von Lösungen in geeigneten, gegebenenfalls gegenüber Isocyanatgruppen inerten Lösemitteln, beispielsweise den oben bei der Herstellung der Polyetherurethane beschriebenen, erfolgen.

Die wasserdispergierbaren bzw. wasserlöslichen Polyetherurethane lassen sich auch ohne spezielle Mischaggregate, wie z. B. Hochgeschwindigkeitsrührer, sehr feinteilig und völlig homogen in Beton- oder Mörtelmassen einrühren. Selbst der Zusatz nur geringer Mengen führt bereits zu einer erheblichen Verbesserung der Vearbeitungsund Gebrauchseigenschaften der Bindemittelmischung. Infolge einer stark verflüssigenden Wirkung auf den Frischmörtelansatz liegt der Wasser/Zement-Wert (W/Z-Wert) bei erfindungsgemäß modifizierten Mörteln gegenüber vergleichbaren unmodifizierten Proben deutlich niedriger. Die ausgehärteten polyurethanmodifizierten Mörtel weisen aufgrund des geringeren Bedarfs an Anmachwasser eine größere Dichte auf, was sich unter anderem in einer erheblichen Verbesserung der mechanischen Eigenschaften, beispielsweise einer Zunahme der Druck- und Biegezugfestigkeit, verbessertem Frost-Tauwechselwiderstand sowie Resistenz gegenüber chemischen Angriffen bemerkbar macht. Die Verarbeitungszeit der Beton- oder Mörtelmassen wird durch die Mitverwendung dieser speziellen Polyetherurethane nicht eingeschränkt.

Erfindungsgemäß unter Zusatz wasserdispergierbarer bzw. wasserlöslicher, gegebenenfalls freie Isocyanatgruppen aufweisender Polyetherurethane hergestellte Betonoder Mörtelmassen können grundsätzlich in allen Gebieten des Bauwesens, in denen heute konventionelle Baustoffe Verwendung finden, zum Einsatz kommen. Sie eignen sich insbesondere für solche Anwendungen, bei denen hohe Anforderungen an die mechanische Festigkeit und chemische Beständigkeit gestellt werden, beispielsweise im Hoch- und Tiefbau, für Fußbodenbeläge, im Straßenbau oder für penetrationsdichte Industrieflächen.

### Beispiele

Alle Prozentangaben beziehen sich, soweit nichts anderslautendes vermerkt, auf das Gewicht.

### Herstellung der Ausgangsverbindungen

### Wasserdispergierbares Polyetherurethan Z1)

45 Gew.-Teile eines Isocyanuratgruppen-haltigen Polyisocyanates auf Basis von HDI mit einem NCO-Gehalt von 21,5 %, einer mittleren NCO-Funktionalität von ca. 3,8, einer Viskosität bei 23°C von 3000 mPas und einem Gehalt an monomerem HDI von 0,1 % werden bei Raumtemperatur unter Rühren mit 55 Gew.-Teilen eines auf Methanol gestarteten monofunktionellen Polyethylenoxidpolyethers mit einem mittleren Molekulargewicht von 350 versetzt und anschließend für 2,5 h auf 100°C erwärmt. Nach Abkühlen auf Raumtemperatur liegt ein praktisch farbloses, klares Polyetherurethan mit folgenden Kenndaten vor:

| | |
|---|---|
| NCO-Gehalt | 3,1 % |
| monomeres HDI | 0,07 % |
| NCO-Funktionalität (ber.) | ca. 1,2 |
| Gehalt an Urethangruppen (ber.) | 9,3 % |
| Gehalt an Ethylenoxideinheiten (ber.) | 50,0 % |
| Viskosität (23°C) | 3270 mPas |

### Wasserdispergierbares Polyetherurethan Z2)

40 Gew.-Teile eines Isocyanuratgruppen-haltigen Polyisocyanates auf Basis von HDI mit einem NCO-Gehalt von 23,1 %, einer mittleren NCO-Funktionalität von ca. 3,3, einer Viskosität bei 23°C von 1200 mPas und einem Gehalt an monomerem HDI von 0,1 % werden bei Raumtemperatur unter Rühren mit 60 Gew.-Teilen eines auf Methanol gestarteten monofünktionellen Polyethylenoxidpolyethers mit einem mittleren Molekulargewicht von 500 versetzt und anschließend für 3 h auf 100°C erwärmt. Nach Abkühlen auf Raumtemperatur liegt ein praktisch farbloses, klares Polyetherurethan mit folgenden Kenndaten vor:

| | |
|---|---|
| NCO-Gehalt | 3,3 % |
| monomeres HDI | 0,05 % |
| NCO-Funktionalität (ber.) | ca. 1,2 |
| Gehalt an Urethangruppen (ber.) | 7,1 % |
| Gehalt an Ethylenoxideinheiten (ber.) | 56,2 % |
| Viskosität (23°C) | 1340 mPas |

### Wasserdispergierbares Polyetherurethan Z3)

35,8 Gew.-Teile eines Isocyanuratgruppen-haltigen Polyisocyanates auf Basis von HDI mit einem NCO-Gehalt von 21,5 %, einer mittleren NCO-Funktionalität von ca. 3,8, einer Viskosität bei 23°C von 3000 mPas und einem Gehalt an monomerem HDI von 0,1 % werden bei Raumtemperatur unter Rühren mit 64,2 Gew.-Teilen eines auf Methanol gestarteten monofunktionellen Polyethylenoxidpolyethers mit einem mittleren Molekulargewicht von 350 versetzt und anschließend für 4 h auf 100°C erwärmt. Nach Abkühlen auf Raumtemperatur liegt ein farbloses, klares Polyetherurethan vor, in dem sich IR-spektroskopisch keine freien Isocyanatgruppen mehr nachweisen lassen. Das Produkt weist die folgenden Kenndaten auf:

| | |
|---|---|
| Gehalt an Urethangruppen (ber.) | 10,8 % |
| Gehalt an Ethylenoxideinheiten (ber.) | 58,3 % |
| Viskosität (23°C) | 3650 mPas |

### Wasserdispergierbares Polyetherurethan Z4)

50,5 Gew.-Teile eines Isocyanuratgruppen-haltigen Polyisocyanates auf Basis von HDI mit einem NCO-Gehalt von 21,5 %, einer mittleren NCO-Funktionalität von ca. 3,8, einer Viskosität bei 23°C von 3000 mPas und einem Gehalt an monomerem HDI von 0,1 % werden bei Raumtemperatur unter Rühren mit 41,4 Gew.-Teilen eines auf Methanol gestarteten monofunktionellen Polyethylenoxidpolyethers mit einem mittleren Molekulargewicht von 500 und 8,1 Gew.-Teilen Ethanol versetzt und anschließend für 3 h auf 100°C erwärmt. Nach Abkühlen auf Raumtemperatur liegt ein farbloses, klares Polyetherurethan vor, in dem sich IR-spektroskopisch keine freien Isocyanatgruppen mehr nachweisen lassen. Das Produkt weist die folgenden Kenndaten auf:

| | |
|---|---|
| Gehalt an Urethangruppen (ber.) | 15,3 % |
| Gehalt an Ethylenoxideinheiten (ber.) | 38,8 % |
| Viskosität (23°C) | 4100 mPas |

### Wasserdispergierbares Polyetherurethan Z5)

63 Gew.-Teile HDI werden bei einer Temperatur von 80 °C unter Rühren mit 37 Gew.-Teilen eines auf Methanol gestarteten monofuktionellen Polyethylenoxidpolyethers mit einem mittleren Molekulargewicht von 500 versetzt und 3 h gerührt, bis ein NCO-Gehalt von 28,2 % erreicht ist. Anschließend wird das nicht umgesetzte monomere HDI bei einer Temperatur von 130°C und einem Druck von 0,1 mbar durch Dünnschichtdestillation abgetrennt. Man erhält ein fast farbloses, klares Polyetherurethan mit folgenden Kenndaten:

| | |
|---|---|
| NCO-Gehalt | 6,0 % |
| monomeres HDI | 0,2 % |
| NCO-Funktionalität (ber.) | ca. 1,0 |
| Gehalt an Urethangruppen (ber.) | 9,4 % |
| Gehalt an Ethylenoxideinheiten (ber.) | 74,5 % |
| Viskosität (23°C) | 360 mPas |

### Wasserdispergierbares Polyetherurethan Z6)

Eine Mischung aus 40 Gew.-Teilen eines Uretdiongruppen- und Isocyanuratgruppen-haltigen Polyisocyanates auf Basis von HDI, mit einem NCO-Gehalt von 21,8 %, einer mittleren NCO-Funktionalität von ca. 2,5, einer Viskosität bei 23°C von 170 mPas und einem Gehalt an monomerem HDI von 0,2 %, und 8,6 Gew.-Teilen 2,4-Diisocyanatotoluol (TDI) wird bei einer Temperatur von 50°C mit 1,4 Gew.-Teilen n-Butanol versetzt und anschließend gerührt, bis der NCO-Gehalt auf 23,9 % abgesunken ist. Man läßt auf 40°C abkühlen, gibt 0,05 Gew.-Teile eines Trimerisierungskatalysators (Mannich-Base auf Basis Phenol/Dimethylamin, 40 % in Butylacetat) zu und hält die Mischung weitere 72 Stunden bei dieser Temperatur, bis der NCO-Gehalt 19,6 % beträgt. Die Trimerisierung wird durch Zugabe von 0,04 Gew.-Teilen p-Toluolsulfonsäuremethylester abgestoppt, das erhaltene Polyisocyanatgemisch mit 50 Gew.-Teilen eines auf Methanol gestarteten monofunktionellen Polyethylenoxidpolyethers eines mittleren Molekulargewichts von 500 versetzt und bei 50°C nachgerührt, bis ein NCO-Gehalt von 5,7 erreicht ist. Nach Abkühlen auf Raumtemperatur liegt ein praktisch farbloses, klares Polyetherurethan mit folgenden Kenndaten vor:

| | |
|---|---|
| NCO-Gehalt | 5,7 % |
| Gehalt an aliphatisch gebundenem NCO (ber.) | mind. 3,7 % |
| Gehalt an aromatisch gebundenem NCO (ber.) | höchstens 2,0 % |
| monomeres TDI | 0,09 % |
| monomeres HDI | < 0,03 % |
| NCO-Funktionalität (ber.) | ca. 1,6 |
| Gehalt an Urethangruppen (ber.) | 7,1 % |
| Gehalt an Ethylenoxideinheiten (ber.) | 46,8 % |
| Viskosität (23°C) | 5400 mPas |

### Herstellung von Polyetherurethan-Emulsionen

Jeweils 10 Gew.-Teile der Polyetherurethane Z1) bis Z6) werden in einem Rührbecher mit 100 Gew.-Teilen Wasser versetzt und 2 min von Hand gerührt. Es bilden sich im Falle der Polyetherurethane Z4) und Z6) sehr feinteilige, blaustichige Emulsionen, im Falle der Polyetherurethane Z1), Z2), Z3) und Z5) praktisch klare Lösungen. Nach einer Standzeit von 180 min bei 23°C sind sämtliche Emulsionen bzw. Lösungen noch stabil; in keinem Fall sind Ausfällungen oder Bodensatz zu beobachten.

### Beispiele 1 - 6: Herstellung Polyetherurethan-modifizierter Mörtelmassen

Aus handelsüblichem Portlandzement DIN 1164 - CEM I 42,5 R als Bindemittel und CEN-Normsand (DIN EN 196) als Zuschlag werden in Anlehnung an DIN EN 196 Teil 1 Frischmörtel- und Festmörtelproben hergestellt. Dazu werden Bindemittel und Anmachwasser in den Mischtrog gefüllt und 30 s bei niedriger Rührgeschwindigkeit (Stufe 1) vorgemischt. Dann wird innerhalb von 30 s bei gleicher Rührgeschwindigkeit der Zuschlag zugegeben und danach mit hoher Rührgeschwindigkeit (Stufe 2) weitere 30 s gemischt. Nach einer Ruhepause von 90 s wird der Mörtel weitere 60 s auf Stufe 2 gerührt. Die als Zusatzmittel eingesetzten wasserdispergierbaren bzw. wasserlöslichen Polyetherurethane Z1) bis Z6) werden jeweils dem Anmachwasser in einer Menge von 2 %, bezogen auf den Bindemittelanteil der Mischung, zugesetzt und mit Hilfe eines Stabmischers 20 s bei 12000 U/min dispergiert. Durch Variation der zugegebenen Wassermenge werden die Mörtel einheitlich auf ein Ausbreitmaß von 170 ± 5 mm eingestellt.

Von den so erhaltenen Frischmörtelmassen wurden jeweils der Wasser/Zement-Wert (W/Z-Wert), der Luftporengehalt sowie die Rohdichte bestimmt. Die gefundenen Werte sind in Tabelle 1 aufgeführt. Als Vergleich dient ein analog hergestellter, unmodifizierter Mörtel.

**Tabelle 1:**

| W/Z-Wert, Luftporengehalt und Frischmörtelrohdichte | | | | |
|---|---|---|---|---|
| Beispiel | Zusatzmittel | W/Z-Wert | Luftporengehalt [Vol.-%] | Frischmörtelrohdichte [kg/dm³] |
| Vergleich | - | 0,47 | 5,3 | 2,25 |
| 1 | Z1) | 0,32 | 5,2 | 2,33 |
| 2 | Z2) | 0,37 | 7,2 | 2,27 |
| 3 | Z3) | 0,34 | 5,6 | 2,41 |
| 4 | Z4) | 0,34 | 5,2 | 2,31 |
| 5 | Z5) | 0,32 | 5,9 | 2,30 |
| 6 | Z6) | 0,34 | 5,7 | 2,42 |

Der Vergleich der W/Z-Werte zeigt die verflüssigende Wirkung der wasserdispergierbaren bzw. wasserlöslichen Polyetherurethane auf die Frischmörtelansätze.

Zur Charakterisierung der Festmörteleigenschaften wurden die Biegezug- und Druckfestigkeit sowie der dynamische Elastizitätsmodul (E-Modul) der polyurethanmodifizierten Mörtel nach einer Hydratationsdauer von 7 und 28 Tagen bestimmt. Als Prüfkörper wurden nach DIN EN 196, Teil 1 Prismen von 40 x 40 x 160 mm hergestellt. Das Entformen der Probekörper fand nach deren Erhärtung, in Abhängigkeit von der Art des zugesetzten Polyetherurethans, 1 bis 2 Tage nach deren Herstellung statt. Anschließend wurden die Normprismen einer Feuchtlagerung unterzogen, d. h. bis zum 7. Tag nach der Herstellung unter Wasser bei 20°C, danach bis zum Prüftermin im Klima bei 23°C / 50 % rel. Luftfeuchte (DIN 50014) gelagert.

Tabelle 2 zeigt die Festmörteleigenschaften der modifizierten Mörtel wiederum im Vergleich zu einer entsprechenden unmodifizierten Probe. Alle erfindungsgemäß hergestellten Mörtel (Beispiele 1 bis 6) zeigen gegenüber der unmodifizierten Probe deutlich höhere Festigkeiten. Die gefundenen Werte liegen zum Teil erheblich über denen der Vergleichsprobe.

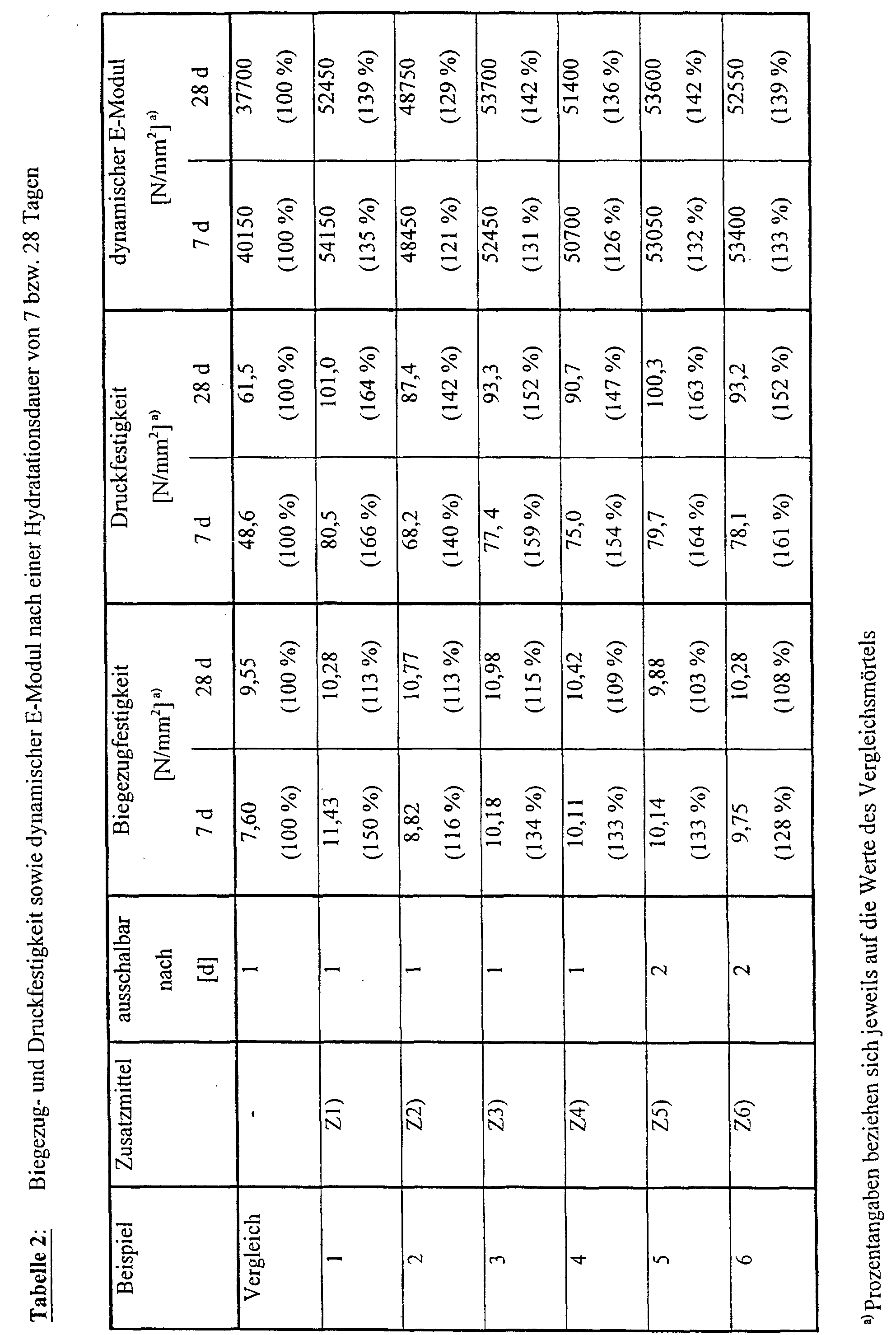

## Patentansprüche

1. Verwendung wasserdispergierbarer bzw. wasserlöslicher Polyetherurethane als Zusatzmittel für hydraulische Bindemittel bei der Herstellung von Mörtelmassen oder Beton, **dadurch gekennzeichnet, daß** Polyetherurethane zum Einsatz kommen, die
a) bei einer mittleren Isocyanatfunktionalität von weniger als 1,8 einen Gehalt an aliphatisch und/oder cycloaliphatisch gebundenen Isocyanatgruppen (berechnet als NCO; Molekulargewicht = 42) von 0 bis 10 Gew.-%,
b) einen Gehalt an Urethangruppen (berechnet als NHCOO; Molekulargewicht =59) von 2,0 bis 25,0 Gew.-% und
c) einen Gehalt an innerhalb von Polyetherketten gebundenen Ethylenoxideinheiten (berechnet als C₂H₂O; Molekulargewicht = 44) von 30 bis 90 Gew.-%
aufweisen, wobei
d) die Polyetherketten im statistischen Mittel 5 bis 50 Ethylenoxideinheiten enthalten und über Polyalkylenoxidpolyetheralkohole, die unter Verwendung von Monoalkoholen des Molekulargewichtsbereiches 32 bis 150 als Startermoleküle hergestellt wurden, in das Polyetherurethan eingebaut wurden.

2. Verwendung wasserdispergierbarer bzw. wasserlöslicher Polyurethane als Zusatzmitteln für hydraulische Bindemittel bei der Herstellung von Mörtelmassen oder Beton gemäß Anspruch 1, **dadurch gekennzeichnet, daß** Polyurethane zum Einsatz kommen, die
a) bei einer mittleren Isocyanatfunktionalität von weniger als 1,8 einen Gehalt an aliphatisch gebundenen Isocyanatgruppen (berechnet als NCO; Molekulargewicht = 42) von 0 bis 10 Gew.-%,
b) einen Gehalt an Urethangruppen (berechnet als NHCOO; Molekulargewicht = 59) von 4,0 bis 21,5 Gew.-% und
c) einem Gehalt an innerhalb von Polyetherketten gebundenen Ethylenoxideinheiten (berechnet als C₂H₂O; Molekulargewicht = 44) von 40 bis 80 Gew.-%
aufweisen, wobei
d) die Polyetherketten im statistischen Mittel 5 bis 25 Ethylenoxideinheiten enthalten und über Polyalkylenoxidpolyetheralkohole, die unter Verwendung von Monoalkoholen des Molekulargewichtsbereiches 32 bis 150 als Startermoleküle hergestellt wurden, in das Polyetherurethan eingebaut wurden.

3. Verwendung wasserdispergierbarer bzw. wasserlöslicher Polyetherurethane gemäß Anspruch 1, **dadurch gekennzeichnet, daß** Polyetherurethane zum Einsatz kommen, die durch Umsetzung von Isocyanuratgruppen aufweisenden Polyisocyanaten auf Basis aliphatischer und/oder cycloaliphatischer Diisocyanate mit einem Isocyanatgruppen-Gehalt von 12 bis 28 Gew.-% und einem Gehalt an monomeren Diisocyanaten von weniger als 0,5 Gew.-% mit Polyalkylenoxidpolyetheralkoholen, die unter Verwendung von Monoalkoholen des Molekulargewichtsbereiches 32 bis 150 als Startermoleküle hergestellt wurden und im statistischen Mittel 5 bis 50 Ethylenoxideinheiten enthalten, und gegebenenfalls weiteren gegenüber Isocyanatgruppen reaktive Gruppen tragenden Verbindungen des Molekulargewichtsbereiches 32 bis 300 hergestellt wurden.

## Claims

1. Use of water-dispersible or water-soluble polyether urethanes as additives for hydraulic binders in the production of mortar compositions or concrete, **characterized in that** polyether urethanes which have
a) at a mean isocyanate functionality of less than 1.8, a content of aliphatically and/or cycloaliphatically bound isocyanate groups (calculated as NCO; molecular weight = 42) of from 0 to 10% by weight,
b) a content of urethane groups (calculated as NHCOO; molecular weight = 59) of from 2.0 to 25.0% by weight and
c) a content of ethylene oxide units bound within polyether chains (calculated as C₂H₂O; molecular weight = 44) of from 30 to 90% by weight,
where
d) the polyether chains contain a mean of from 5 to 50 ethylene oxide units and have been incorporated into the polyether urethane via polyalkylene oxide polyether alcohols which have been prepared using monoalcohols having a molecular weight in the range from 32 to 150 as starter molecules,
are used.

2. Use of water-dispersible or water-soluble polyurethanes as additives for hydraulic binders in the production of mortar compositions or concrete according to Claim 1, **characterized in that** polyurethanes which have
a) at a mean isocyanate functionality of less than 1.8, a content of aliphatically bound isocyanate groups (calculated as NCO; molecular weight = 42) of from 0 to 10% by weight,
b) a content of urethane groups (calculated as NHCOO; molecular weight = 59) of from 4.0 to 21.5% by weight and
c) a content of ethylene oxide units bound within polyether chains (calculated as C₂H₂O; molecular weight = 44) of from 40 to 80% by weight,
where
d) the polyether chains contain a mean of from 5 to 25 ethylene oxide units and have been incorporated into the polyether urethane via polyalkylene oxide polyether alcohols which have been prepared using monoalcohols having a molecular weight in the range from 32 to 150 as starter molecules,
are used.

3. Use of water-dispersible or water-soluble polyether urethanes according to Claim 1, **characterized in that** polyether urethanes are used which have been prepared by reaction of polyisocyanates which contain isocyanurate groups, are based on aliphatic and/or cycloaliphatic diisocyanates and have an isocyanate group content of from 12 to 28% by weight and a content of monomeric diisocyanates of less than 0.5% by weight with polyalkylene oxide polyether alcohols which have been prepared using monoalcohols having a molecular weight in the range from 32 to 150 as starter molecules and contain a mean of from 5 to 50 ethylene oxide units and, if desired, further compounds bearing groups which are reactive toward isocyanate groups and having a molecular weight in the range from 32 to 300.

## Revendications

1. Utilisation de polyétheruréthanes solubles ou dispersibles dans l'eau comme additif pour des liants hydrauliques dans la fabrication de masses de mortier ou de béton, **caractérisée en ce que** les polyétheruréthanes utilisés:
a) présentent un taux de radicaux isocyanate liés aliphatiquement et/ou cycloaliphatiquement de moins de 1,8 en cas de fonctionnalité moyenne des isocyanates (calculés comme NCO; poids moléculaire = 42) de 0 à 10% en poids;
b) présentent un taux de radicaux uréthane (calculés comme NHCOO; poids moléculaire = 59) de 2,0 à 25,0 % en poids et
c) un taux d'unités éthylèneoxyde liées à l'intérieur de chaînes de polyéther (calculées comme C₂H₂O; poids moléculaire = 44) de 30 à 90% en poids,
auquel cas
d) les chaînes de polyéther contiennent en moyenne statistique 5 à 50 unités d'éthylèneoxyde et ont été intégrées dans le polyétheruréthane par l'intermédiaire de polyétheralcools de polyalkylèneoxyde qui ont été préparés en utilisant des monoalcools d'une gamme de poids moléculaire de 32 à 150 comme molécule de départ.

2. Utilisation de polyuréthanes solubles ou dispersibles dans l'eau comme additif pour des liants hydrauliques dans la fabrication de masses de mortier ou de béton conformément à la revendication 1, **caractérisée en ce que** les polyuréthanes utilisés:
a) présentent un taux de radicaux isocyanate liés aliphatiquement de moins de 1,8 en cas de fonctionnalité moyenne des isocyanates (calculés en NCO; poids moléculaire = 42) de 0 à 10% en poids;
b) présentent un taux de radicaux uréthane (calculés comme NHCOO; poids moléculaire = 59) de 4,0 à 21,5 % en poids et
c) un taux d'unités éthylèneoxyde liées à l'intérieur de chaînes de polyéther (calculées comme C₂H₂O; poids moléculaire = 44) de 40 à 80% en poids,
auquel cas
d) les chaînes de polyéther contiennent en moyenne statistique 5 à 25 unités d'éthylèneoxyde et ont été intégrées dans le polyétheruréthane par l'intermédiaire de polyétheralcools de polyalkylèneoxyde qui ont été préparés en utilisant des monoalcools d'une gamme de poids moléculaire de 32 à 150 comme molécule de départ.

3. Utilisation de polyétheruréthanes solubles ou dispersibles dans l'eau conformément à la revendication 1, **caractérisée en ce que** les polyétheruréthanes utilisés sont préparés par réaction de polyisocyanates présentant des radicaux isocyanurate à base de diisocyanates aliphatiques et/ou cycloaliphatiques avec un taux de radicaux isocyanate de 12 à 28% en poids et un taux de diisocyanates monomères de moins de 0,5% en poids avec des polyétheralcools de polyalkylèneoxyde qui ont été préparés en utilisant des monoalcools d'une plage de poiss moléculaire de 32 à 150 comme molécule de départ et, en moyenne statistique, contiennent 5 à 50 unités d'éthylèneoxyde et, éventuellement, d'autres composés portant des radicaux réactifs avec les radicaux isocyanate d'un poids moléculaire de l'ordre de 32 à 300.
